(19) Europäisches Patentamt

European Patent Office

Office européen des brevets

(11) **EP 1 244 279 A1**

(12) **EUROPEAN PATENT APPLICATION**

(43) Date of publication:
**25.09.2002 Bulletin 2002/39**

(51) Int Cl.⁷: **H04M 1/60**

(21) Application number: **01107038.0**

(22) Date of filing: **21.03.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sony International (Europe) GmbH 10785 Berlin (DE)**

(72) Inventor: **Reichelmeir, Thomas, Digital Telecomm. Europe 85609 Aschheim (DE)**

(74) Representative: **Körber, Martin, Dipl.-Phys. et al Mitscherlich & Partner Patentanwälte Sonnenstrasse 33 80331 München (DE)**

(54) **Mobile telephone with ear protection means**

(57) The present invention relates to a mobile telecommunication means (8) for a wireless telecommunication system, comprising an outputting means (9) for outputting sound signals, a means (10) for detecting sound signals, and a calculating means (11), which is connected to the outputting means (9) and the means (10) for detecting sound signals, for calculating the distance between the mobile telecommunication means (8) and an object (6) on the basis of a reflected sound signal, which is output by the outputting means (9) and detected by the means (10) for detecting sound signals.

The present invention further relates to method for controlling the volume of sound signals generated by a sound generating means of a mobile telecommunication means (8).

Fig. 3

EP 1 244 279 A1

Printed by Jouve, 75001 PARIS (FR)

**Description**

The present invention relates to a mobile telecommunication means for a wireless telecommunication system, like a mobile telephone or a personal digital assistant (PDA) usable for example in the Global System for Mobile Communication (GSM) or the Universal Mobile Telephone System (UMTS), and a method for controlling the volume of sound signals generated by a sound generating means of a mobile telecommunication means.

Mobile devices usually have to present different sound generating functions, like speaker function close to human's ear, hands-free speaker function, ringer function, alarm function, game sound, etc. Due to the nature of this sound generating functions, the respective sound signals have to be output with different sound pressure levels. E.g. for "normal" speaker mode, the acoustic signal (e.g. speech) is output with a low sound level, since the speaker of the mobile telephone is held next to the user's head and therefore the speaker is closely held to the ear of the user.

In contrast thereto e.g. ringer signals and the sound signals for the hands-free mode (e.g. speech during a telephone call) have to be output with a high sound level, since the mobile telephone is usually widely distanced (in the dimension of e.g. a few decimetres) from the head and the ear, respectively, of the user, when such sound signals with a high sound level are output.

To protect the ear of a user from hazard by acoustic signals which are output with a high sound level, it must be ensured that a high-level sound generation is positively inhibited when the mobile telephone is placed in close distance to the user's ear.

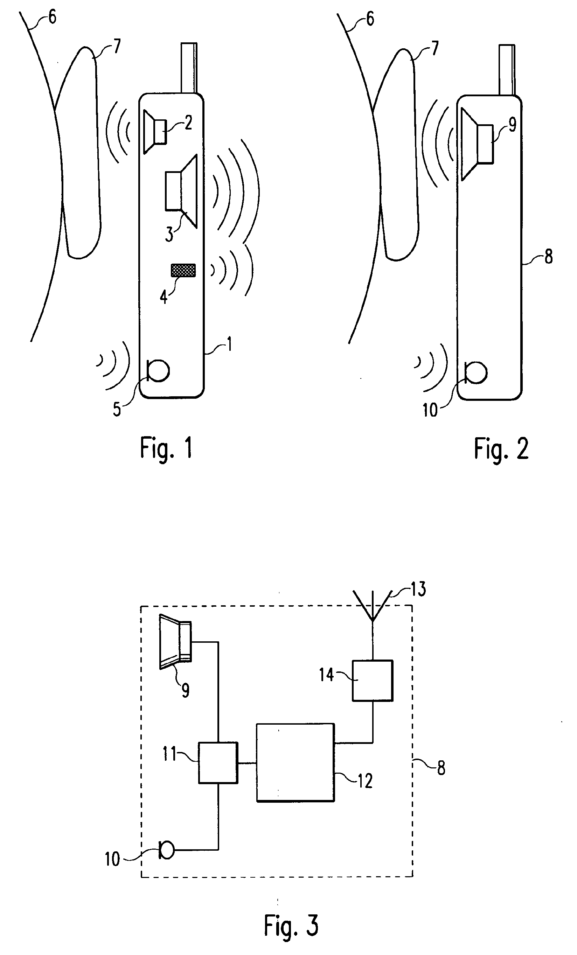

To solve this problem, known mobile telephones comprise separate outputting means for outputting acoustic signals as shown in Fig. 1.

Fig. 1 shows a mobile telephone 1 according to the prior art, comprising a normal speaker 2 for outputting acoustic sound signals (like speech) with a low sound level when the mobile telephone is held closely to the head 6 and the ear 7 of a user. The mobile telephone 1 further comprises a separate hands-free speaker 3 for outputting sound signals with a high sound level, when the mobile telephone 1 is used in the hands-free mode, and a ringer 4 for outputting an acoustic alert signal. The voice of the user is detected by a microphone 5 of the mobile telephone 1.

Thereby, the speaker designed for the normal operation mode is arranged at the front side of the mobile telephone 1 and the outputting means for outputting the sound signals with a high sound level, like hands-free speaker 3 and ringer 4, are arranged at the back side of the mobile telephone 1. Thus, even when the mobile telephone 1 e.g. is operated in hands-free mode when holding the mobile telephone 1 (with its front side) directly close to the ear 7, the ear 7 is protected from injuring, since the sound waves are not directly output to the ear 7.

However, this solution has the disadvantage that there is at least need for one outputting means for outputting acoustic signals with a low sound level (normal speaker 2) and additional outputting means for outputting acoustic signals with a high sound level (hands-free speaker 3). Thus, this solution is costly, heavy in weight and space consuming. Further arranging the hands-free speaker 3 at the backside of the mobile telephone 1 is not optimal e.g. when the mobile telephone is used in a car held by a car cradle since the mobile telephone 1 is usually held by the car cradle with the front side directed to the user, and the backside covered by the cradle.

To avoid or reduce some of the disadvantages of the described solution, some mobile telephones are provided with combined speakers which perform both low sound level as well as high sound level acoustic functions, e.g. a speaker which outputs acoustic signals with a normal sound level for using the telephone directly close to the ear as well as acoustic signals with a high sound level for using the telephone hands-free. To protect the ear of the user from injuring, these mobile telephones often comprise a switch. This switch is switching two modes so that, the acoustic signals are either output with a high sound level (in the case of a wide distance) or with a low sound level (in the case of a close distance).

This solution has, however, the disadvantage, that the user has to switch between the two modes by himself so that the users ear may still be harmed by mistake.

It is therefore the object of the present invention to provide a mobile telecommunication means for a wireless telecommunication system, like a mobile telephone, in which the ear of the user is protected from injuring by too high sound pressure levels in a not expensive but effective way.

The above object is achieved by a mobile telecommunication means for a wireless telecommunication system according to claim 1 and a method for controlling the volume of sound signals generated by a sound generating means of a mobile telecommunication means according to claim 12.

The mobile telecommunication means for a wireless telecommunication system according to the present invention comprises an outputting means, i.e. a speaker, for outputting sound signals and a means for detecting sound signals, e.g. the microphone of the mobile telecommunication means. Further, the mobile telecommunication means comprises a calculating means, which is connected to the outputting means and the means for detecting sound signals, for calculating the distance between the mobile telecommunication means and an object, particularly the head of a user, on the basis of a reflected sound signal, which is output by the outputting means and detected by the means for detecting sound signals.

The advantage of the present invention is that the calculating of a distance between the mobile telecommunication means and the object is easy and cheap to implement in mobile telecommunication means as no additional elements are necessary apart from those already present in mobile telephones.

The outputting means is adapted to be operated in a first mode for outputting acoustic signals at a low sound level and in a second mode for outputting acoustic signals at a high sound level. The outputting means (speaker), which is arranged inside the front of the mobile telecommunication means, provides normal speaker functions, i.e. outputting acoustic signals with a low sound level (first mode) for using the mobile telecommunication means when it is held close to the ear, as well as functions, which requires a high sound level (second mode), e.g. hands-free speaker function, for outputting acoustic signals.

It is noted, that the terms "low sound level" and "high sound level" signify sound levels, which are suitable for carrying out the respective functions, e.g. normal and/or hands-free speaker function. Further, the term "sound signal" signifies a sonic signal, which could be audible as well as inaudibly (e.g. an ultrasonic signal).

According to the present invention, this speaker is also used for outputting a special generated sound signal, which is received by a means for detecting sound signals, i.e. the microphone, of the mobile telecommunication means. On the basis of this sound signal, the distance between the mobile telecommunication means and the head (and ear, respectively) of an user is calculated.

The advantage of the present invention is that there is no need for additional expensive and heavy components and extra circuitry, which also needs space like, e.g. separate speaker for a normal operation and hands-free operation and body distance detection unit, since the present invention can be realised with components, which are used in mobile telecommunication means anyway. Thus, the present invention is cheap and easy to implement and it can be hidden in normal speaker operation.

Also further, the speaker for outputting acoustic signals for the hands-free function can be placed on the front side of the mobile telecommunication means. The front side of the mobile telecommunication means is the best position for placing the hands-free speaker, e.g. when using the mobile telecommunication means in a car cradle, whereby the front side of the mobile telecommunication means is usually directed to the user.

Advantageously, the transmitted detection sound signal, which is output by the outputting means is an ultrasonic signal like an ultrasonic impulse, therefore, the outputting means has to be adapted to output ultrasonic signals and the means for detecting sound signals has to be adapted to receive and input ultrasonic signals to the mobile telecommunication means.

The sound level which is output by the outputting means during the operation of the mobile telecommunication means (e.g. speech during a telephone call) depends on the calculated distance between the mobile telecommunication means and the object. Thereby, the acoustic signal is output with a high sound level, when the mobile telecommunication means is widely distanced (e.g. in dimension of a few decimetre) from the object, and output with a low sound level, when the mobile telecommunication means is closely distanced to the object, i.e. held directly or up to a few centimetres to the ear.

Thus, it is given an additional safety for a user of the mobile telecommunication means, since his or her ear is protected from injuring by means of an accidentally output of acoustic signals of high volume while holding the mobile telecommunication means close to his or her ear.

Further advantageously, the calculating means calculates the distance shortly before (e.g. one or up to a few seconds) the speaker starts outputting acoustic signals (e.g. for carrying out a telephone call).

In one embodiment of the present invention, the calculating means calculates the distance periodically, e.g. every few seconds.

The outputting means can provide all acoustic output functions, which are necessary for the operation of the mobile telecommunication means, e.g. ringer function, game sound, alarm bells, etc. additionally to the described normal and hands-free speaker function. Thus, there is no need for additional outputting means for outputting acoustic signals.

The calculating means calculates the distance between the mobile telecommunication means and the object (ear of the user) on the basis of the time difference between outputting the sound signal by the outputting means and inputting (and receiving, respectively) the sound signal by the means for detecting sound signals.

The transmission power of the mobile telecommunication means can advantageously be controlled depending on the value of the calculated distance between the mobile telecommunication means and the object such, that it transmits with a high transmission power, when the mobile telecommunication means is widely distanced to the object, and with a low transmission power, when it is closely distanced to the object. Hereby, an impairment of a user of the mobile telecommunication means by electromagnetic radiation can be minimised.

Further, the transmission power of the mobile telecommunication means is controlled by controlling the number of time slots used for the transmission, allowing a control of the average transmission power without modifying the absolute value of the transmission power. For example, in a multislot system like the General Packet Radio Service (GPRS), in which the transmission power depends on the number of timeslots used for the connection, an increase in the number of the timeslots used results in an increase of the average transmission power, while a reduction in the timeslots used e.g. to a simple timeslot results in a decrease of the average transmission power.

In the following description, a preferred embodiment of the present invention is explained in more detail in relation to the enclosed drawings, in which

Fig. 1 shows the acoustic functions of a mobile telecommunication means according to the prior art,

Fig. 2 shows the acoustic functions of a mobile telecommunication means according to the present invention,

Fig. 3 shows a schematic block diagram of a mobile telecommunication means according to the present invention, and

Fig. 4, 5a, 5b and 6 show the principle of calculating the distance between the mobile telecommunication means and an object.

Fig. 2 shows a mobile telecommunication means 8 (further called mobile telephone 8) according to the present invention, comprising outputting means (loudspeaker 9, sound generating means) and means for detecting sound signals (microphone 10).

Thereby, the speaker 9 is a combined device for outputting acoustic signals with a low sound level in a first mode as well as acoustic signal with a high sound level in a second mode. Thus, the speaker is used for normal speaker operation, like outputting of speech when holding the mobile telephone 8 to the head 6 and the ear 7 respectively of a user. The speaker 9 is also used for an operation mode requiring a high sound level of the output acoustic signals, like hands-free function, ringer function, alarm bell, etc.

Fig. 3 shows a block diagram of the mobile telephone 8 according to the present invention.

For carrying out the present invention the mobile telephone 8 comprises a combined speaker 9, a microphone 10 and a calculating means 11. The calculating means is preferably implemented as a separate circuitry or as a part of the processing means 12 as well as a software module.

Further, the mobile telephone 8 comprises a processing means 12, which can be implemented as a separate circuitry or as an integral circuitry combined with the calculating means 11, for controlling and processing the operation of the mobile telephone 8 and an antenna 13 connected with a transceiving means 14 for communicating with other mobile telecommunication means and/or base stations of the wireless telecommunication system over an air-interface.

The means, which are further necessary for the operation of the mobile telephone 8, like operational controls, display means, signal processing means, etc.

are also comprised but not shown for the sake of clarity.

According to the present invention, shortly before an acoustic operation, which e.g. requires an output acoustic signal with a high sound level like ringer or hands-free signals, the distance between the head of the user and the mobile telephone 8 is detected by the mobile telephone 8.

Therefore, a sound signal is output as a sound signal by the loudspeaker 9. This sound signal may be a pulse, which is output as an ultrasonic pulse by the outputting means 9.

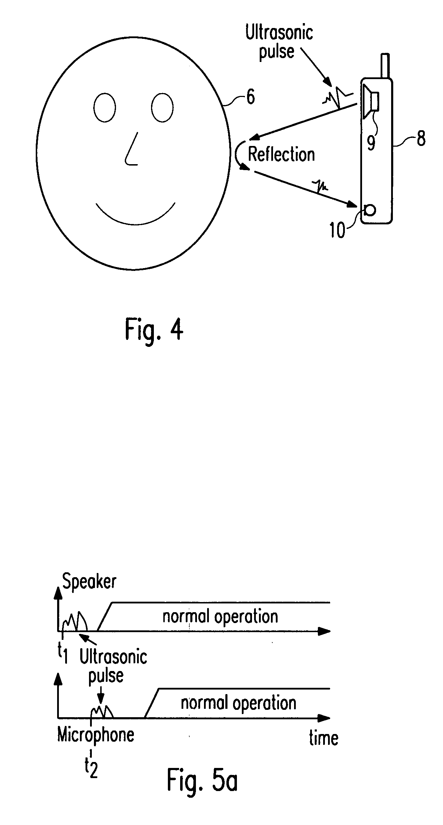

As shown in Fig. 4, parts of the output sound signal are eventually reflected by the head 6 of the user.

After reflecting, the ultrasonic echo pulse (sound signal) is received by the means for detecting sound signals (microphone 10 of the mobile telephone 8) of the mobile telephone 8. Back to Fig.3, after detecting the sound signal the calculating means 11 calculates the distance between the mobile telephone 8 and the head of the user.

As shown in Fig. 5a, the distance is calculated on the basis of the time difference ($t_2$-$t_1$) between the outputting of the sound signal (ultrasonic pulse) and the detection of the echo signal. After calculating the distance, the speaker starts outputting the acoustic signals.

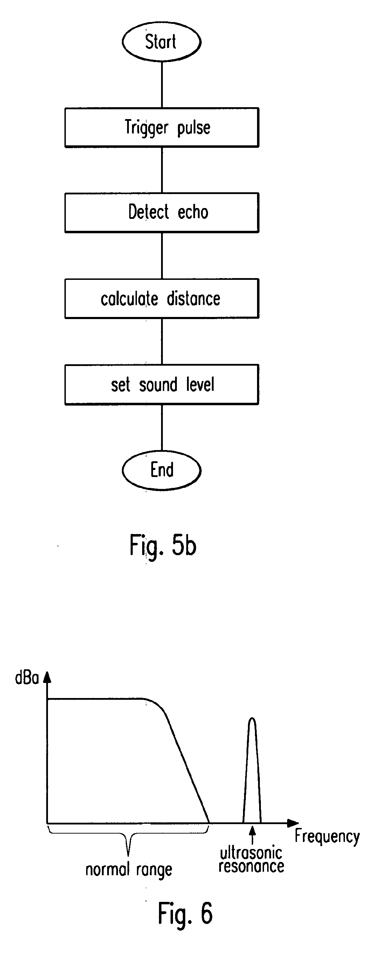

Fig. 5b shows a flow chart showing the procedure of calculating the distance D and setting the output sound level on the basis of the time difference $\Delta t = t_2 - t_1$.

After starting the procedure, the calculating means pulse starts a timer synchronous to outputting the sound signal by a trigger pulse. After detecting the echo of the output sound signal, the timer is stopped and the time difference $\Delta t$ is calculated by the calculating means. On the basis of the time difference $\Delta t$ the distance D is calculated by the calculating means as follows:

$$D = (\Delta t * V_{sound})/2$$

whereby $V_{sound}$ is the mean velocity of sound in air.

Depending on the calculated distance, the acoustic signals are output with the respective sound level (set sound level). Thus, if a close object is detected by the described mechanism, the sound pressure level of the speaker 9 will be kept under a certain level, which is not dangerous for the human ear, to protect the human ear from injuring.

The distance between the mobile telephone 8 and the head of the user is calculated every time before and/or periodically during outputting acoustic signals, which require a high sound level, are output.

As shown in Fig. 6, the speaker and the microphone according to the present invention have to fulfil the following requirements:

Both the speaker and the microphone have to have the ability to operate in the ultrasonic frequency range as well as in the acoustic frequency range. Usually, the ultrasonic frequency range is outside the normal operation frequency of the speaker/microphone. This can be achieved by an especially designed resonance frequency (ultrasonic resonance) of the speaker/microphone membrane.

Further, the speaker has to have the ability to output acoustic signals with a low sound level (dBa) as well as with a high sound level.

The present invention has been explained with reference to the application of setting a sound level on the basis of the calculated distance. However, the calculated distance can also be used for controlling other functions of the mobile telephone, e.g. the transmitting power of the transmitted radio signal, which is transmitted by the antenna. Thereby, the transmitting power is at maximum, when the mobile telephone works in the hands-free mode (widely distanced from the head of the user), and the transmitting power is reduced, when the mobile telephone is held next to the head of the user. The average transmitted power in a General Packet Radio Service (GPRS) system can e.g. be reduced by reducing the number of time slots, and increased by increasing the number of time slots used for the transmission.

**Claims**

1. Mobile telecommunication means (8) for a wireless telecommunication system, comprising
   an outputting means (9) for outputting sound signals,
   a means (10) for detecting sound signals, and
   a calculating means (11,12), which is connected to the outputting means (9) and the means (10) for detecting sound signals, for calculating the distance between the mobile telecommunication means (8) and an object (6) on the basis of a reflected sound signal, which is output by the outputting means (9) and detected by the means (10) for detecting sound signals.

2. Mobile telecommunication means according to claim 1,
   **characterised in**
   **that** the outputting means (9) is adapted to be operated in a first mode for outputting acoustic signals at a low sound level and in a second mode for outputting acoustic signals at a high sound level

3. Mobile telecommunication means (8) according to claim 1,
   **characterised in**
   **that** the sound signal is an ultrasonic signal.

4. Mobile telecommunication means (8) according to claim 2,
   **characterised in**

**that** the sound level of acoustic signals, which are output by the outputting means (9), depends on the calculated distance of the mobile telecommunication means (8) to the object (6).

5. Mobile telecommunication means (8) according to claim 4,
   **characterised in**
   **that** acoustic signals are output with a high sound level, when the mobile telecommunication means (8) is widely distanced, and output with a low sound level, when the mobile telecommunication means (8) is closely distanced to the object (6).

6. Mobile telecommunication means (8) according to one of the claims 1 to 5,
   **characterised in**
   **that** the calculating means (11, 12) calculates the distance shortly before the outputting means (9) starts outputting acoustic signals.

7. Mobile telecommunication means (8) according to one of the claims 1 to 6,
   **characterised in**
   **that** the calculating means (11, 12) calculates the distance periodically.

8. Mobile telecommunication means (8) according to one of the claims 1 to 7,
   **characterised in**
   **that** the outputting means (11, 12) provides all acoustic output functions, which are necessary for the operation of the mobile telecommunication means (8).

9. Mobile telecommunication means (8) according to one of the claims 1 to 8,
   **characterised in**
   **that** the calculating means (11, 12) calculates the distance between the mobile telecommunication means (8) and the object (6) on the basis of the time difference between outputting the sound signal by the outputting means (9) and inputting the sound signal by the means (10) for detecting sound signals.

10. Mobile telecommunication means (8) according to one of the claims 1 to 9,
    **characterised in**
    **that** the mobile telecommunication means (8) transmits a radio signal with a high transmission power, when the mobile telecommunication means (8) is widely distanced to the object (6), and transmits a radio signal with a low transmission power, when the mobile telecommunication means (8) is closely distanced to the object (6).

11. Mobile telecommunication means (8) according to claim 10,
**characterised in**
**that** the transmission power of the mobile telecommunication means (8) is controlled by controlling the number of time slots used for the transmission.

12. Method for controlling the volume of sound signals generated by a sound generating means of a mobile telecommunication means (8), comprising the steps of:

calculating the distance between the mobile telecommunication means (8) and an object (6) on the basis of an sound signal, which is output by a sound generating means (9) and detected by a means (10) for detecting sound signals, whereby the sound level of acoustic signals, which are output by the sound generating means (9), depends on the calculated distance of the mobile telecommunication means (8) to the object (6).

13. Method according to claim 12,
**characterised in**
**that** the sound signal is an ultrasonic signal.

14. Method according to claim 12 or 13,
**characterised in**
**that** sound signals are output with a high sound level, when the mobile telecommunication means (8) is widely distanced, and output with a low sound level, when the mobile telecommunication means (8) is closely distanced to the object (6).

15. Method according to claim 12, 13 or 14,
**characterised in**
**that** the distance is calculated shortly before the sound generating means (9) starts outputting sound signals.

16. Method according to one of the claims 12 to 15,
**characterised in**
**that** the sound signal is detected periodically.

17. Method according to one of the claims 12 to 16,
**characterised in**
**that** the distance is calculated on the basis of the time difference between outputting the sound signal and detecting the sound signal.

Fig. 1

Fig. 2

Fig. 3

Fig. 4

Fig. 5a

```
        ┌─────────┐
        │  Start  │
        └─────────┘
             │
   ┌───────────────────┐
   │   Trigger pulse   │
   └───────────────────┘
             │
   ┌───────────────────┐
   │   Detect echo     │
   └───────────────────┘
             │
   ┌───────────────────┐
   │ calculate distance│
   └───────────────────┘
             │
   ┌───────────────────┐
   │  set sound level  │
   └───────────────────┘
             │
        ┌─────────┐
        │   End   │
        └─────────┘
```

Fig. 5b

Fig. 6

**European Patent Office**

# EUROPEAN SEARCH REPORT

Application Number

EP 01 10 7038

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 564 160 A (AMERICAN TELEPHONE & TELEGRAPH) 6 October 1993 (1993-10-06) | 1,2,4,12 | H04M1/60 |
| A | * abstract *<br><br>* column 1, line 3-11 *<br>* column 2, line 21 - column 5, line 51; figures 1-5 * | 3,5-11, 13-17 | |
| Y | EP 0 469 955 A (KITAGAWA SHUJI) 5 February 1992 (1992-02-05) | 1,2,4,12 | |
| A | * column 4, line 38-50; claim 4 * | 3,5-11, 13-17 | |
| A | EP 0 776 115 A (NOKIA MOBILE PHONES LTD) 28 May 1997 (1997-05-28)<br>* abstract *<br>* claims 1-7 * | 1-17 | |
| A | EP 0 912 031 A (NORTHERN TELECOM LTD) 28 April 1999 (1999-04-28)<br>* abstract *<br>* claim 1 * | 1-17 | TECHNICAL FIELDS SEARCHED (Int.Cl.7)<br><br>H04M |

The present search report has been drawn up for all claims

| Place of search | Date of completion of the search | Examiner |
|---|---|---|
| MUNICH | 11 June 2001 | Santacroce, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

### ANNEX TO THE EUROPEAN SEARCH REPORT
### ON EUROPEAN PATENT APPLICATION NO.                    EP 01 10 7038

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2001

| Patent document cited in search report | | Publication date | Patent family member(s) | | Publication date |
|---|---|---|---|---|---|
| EP 0564160 | A | 06-10-1993 | US | 5224151 A | 29-06-1993 |
| | | | AU | 3515393 A | 07-10-1993 |
| | | | CA | 2090167 A,C | 02-10-1993 |
| | | | DE | 69318613 D | 25-06-1998 |
| | | | DE | 69318613 T | 01-10-1998 |
| | | | ES | 2116409 T | 16-07-1998 |
| | | | JP | 6046123 A | 18-02-1994 |
| | | | SG | 44422 A | 19-12-1997 |
| EP 0469955 | A | 05-02-1992 | JP | 4281649 A | 07-10-1992 |
| | | | JP | 4086142 A | 18-03-1992 |
| | | | AU | 636778 B | 06-05-1993 |
| | | | AU | 8049291 A | 06-02-1992 |
| | | | CA | 2047423 A | 31-01-1992 |
| | | | CN | 1058684 A,B | 12-02-1992 |
| EP 0776115 | A | 28-05-1997 | FI | 955683 A | 25-05-1997 |
| | | | JP | 9181801 A | 11-07-1997 |
| | | | US | 6014573 A | 11-01-2000 |
| EP 0912031 | A | 28-04-1999 | US | 6087653 A | 11-07-2000 |
| | | | CA | 2249844 A | 24-04-1999 |

EPO FORM P0459

For more details about this annex : see Official Journal of the European Patent Office, No. 12/82